# FASCICULE DE BREVET EUROPEEN

(11) **EP 3 768 996 B1**
(45) Date de publication et mention de la délivrance du brevet: **09.03.2022**
(21) Numéro de dépôt: 19711611.4
(22) Date de dépôt: 22.03.2019
(51) Int. Cl.: F16H 63/20

(54) **PROCÉDÉ ET SYSTÈME DE COMMANDE D'UN ACTIONNEUR DE BOITE D'UNE TRANSMISSION POUR VÉHICULE AUTOMOBILE À PROPULSION HYBRIDE**
VERFAHREN UND SYSTEM ZUR STEUERUNG EINES GETRIEBESTELLGLIEDS EINES GETRIEBES FÜR EIN KRAFTFAHRZEUG MIT HYBRIDANTRIEB
METHOD AND SYSTEM FOR CONTROLLING A GEARBOX ACTUATOR OF A TRANSMISSION FOR A HYBRID-PROPULSION MOTOR VEHICLE

(30) Priorité: 23.03.2018 FR 1852525
(43) Date de publication de la demande: 27.01.2021
(73) Titulaire: Renault s.a.s, 92100 Boulogne Billancourt (FR); NISSAN MOTOR CO., LTD., Yokohama-shi, Kanagawa 221-0023 (JP)
(72) Inventeur: CHAMEROY, Adrien, 78960 Voisins-le-Bretonneux (FR); CHANTREL, Cédric, 94220 Charenton Le Pont (FR)
(74) Mandataire: Renault Group
(86) Numéro de dépôt international: PCT/EP2019/057220
(87) Numéro de publication internationale: WO 2019/180195

(56) Documents cités:
- FR-A1- 2 814 524
- FR-A1- 2 991 020
- FR-A1- 3 019 791

## Description

La présente invention concerne le domaine des systèmes de couplage, notamment dans une transmission de véhicule automobile.

Plus particulièrement, l'invention concerne de préférence les transmissions de véhicules à propulsion hybride comprenant, d'une part, un moteur thermique d'entrainement et, d'autre part, une machine électrique. L'intérêt des transmissions hybrides est de fournir deux sources d'énergies, thermique et électrique, à la chaine cinématique d'entrainement du véhicule. Les apports de couple de ces deux énergies peuvent se cumuler dans un mode dit « hybride ».

De telles transmissions comprennent des systèmes de couplage, par exemple à clabots, ou tout type de coupleur progressif ou non permettant l'engagement de différents rapports de réduction de la transmission.

L'intérêt des transmissions hybrides est de fournir deux sources d'énergies, thermique et électrique, à la chaine cinématique d'entrainement du véhicule. Les apports de couple de ces deux énergies peuvent se cumuler dans un mode dit « hybride » ou peuvent être utilisés séparément, soit dans un mode dit « thermique pur » où la machine électrique ne fournit pas de couple à la chaîne de traction, soit dans un mode dit « électrique pur », où le moteur thermique ne fournit pas de couple à la chaîne de traction.

Les transmissions hybrides permettent d'entrainer le moteur thermique à l'arrêt ou en roulage en utilisant la machine électrique comme démarreur. Les transmissions hybrides permettent également de charger les batteries du véhicule par la machine électrique fonctionnant en mode générateur.

Les documents EP 2 726 757 - B1 (Renault) et EP 2 694 309 - A1 (Renault) décrivent l'architecture d'une telle transmission hybride comprenant une ligne primaire comportant un arbre primaire plein connecté au volant d'inertie dynamique d'un moteur thermique et portant un pignon fou pouvant être connecté audit arbre plein par un premier système de couplage de type à clabots et un arbre primaire creux concentrique à l'arbre primaire plein, relié au rotor d'une machine électrique et portant un pignon fixe pouvant être connecté à l'arbre plein par le premier système de couplage.

La transmission comprend en outre un arbre secondaire portant deux pignons fous pouvant être connectés à la ligne primaire par un second système de couplage de type à clabots. L'arbre secondaire porte également un pignon fixe et un pignon de descente sur un différentiel relié aux roues motrices du véhicule.

Les transmissions comprennent généralement un mécanisme de sélection capable de choisir de façon exclusive entre, d'une part l'engagement des rapports 1 ou 3 et, d'autre part, l'engagement des rapports 2 ou 4. Toutefois, l'activation de ce mécanisme de sélection n'est possible que lorsque les différents éléments de la transmission sont correctement alignés, tels que notamment la fourchette des rapports 1 et 3, la fourchette des rapports 2 et 4, les doigts d'engagement et le mécanisme d'inter-verrouillage.

L'objectif de l'invention est donc d'assurer de manière robuste, le fonctionnement du mécanisme de sélection, en s'assurant de l'alignement des éléments entre eux.

L'invention a pour objet un procédé de commande d'au moins un actionneur de boite d'un mécanisme de sélection d'une transmission pour véhicule automobile à propulsion hybride comprenant un moteur thermique et au moins une machine électrique.

Ladite transmission comprend un arbre moteur relié directement ou indirectement au moteur thermique et/ou à la machine électrique, et un arbre d'entrainement relié aux roues motrices du véhicule automobile, et au moins un système de couplage comprenant des clabots solidaires d'une part d'un pignon fou porté à rotation libre sur un arbre d'entrainement et d'autre part des clabots solidaires d'une fourchette solidaire en rotation de l'arbre moteur. La fourchette étant configurée pour être déplacée longitudinalement selon l'axe de l'arbre d'entrainement par l'actionneur de boite afin d'engager ou désengager les clabots, le mécanisme de sélection comprenant des doigts d'engagement capables de se déplacer selon l'axe de l'arbre d'entrainement par l'actionneur de boite pour engager ou désengager les rapports de réduction et un mécanisme d'inter-verrouillage capable de verrouiller la position desdits doigts d'engagement. Le mécanisme de sélection comprend en outre un système mécanique de stabilisation des fourchettes,

Afin d'assurer une position stable des fourchettes compatible avec le fonctionnement du mécanisme de sélection, celui-ci comprend un système mécanique de stabilisation des fourchettes, dit de « billage ».

Selon le procédé, on assure le désengagement du rapport engagé en fonction de la position de l'actionneur issue d'un capteur de position. En d'autres termes, la position de l'actionneur est régulée à une position permettant le désengagement.

On ramène ensuite la position de la fourchette dans la zone d'attraction du système de stabilisation des fourchettes, dit de « billage », en déterminant itérativement la position de l'actionneur en fonction de la fourchette. Dans cette zone d'attraction, la fourchette est ramenée dans sa position stable.

Et, on régule la position de l'actionneur à sa position centrale pour réaligner le mécanisme d'inter-verrouillage avec le doigt d'engagement.

Avantageusement, le système de stabilisation des fourchettes comprend un solénoïde et un ressort de rappel connecté au mécanisme d'inter-verrouillage.

Lorsqu'un courant parcourt le solénoïde, celui-ci provoque le déplacement conjoint du mécanisme d'inter-verrouillage et des doigts d'engagement. A l'annulation du courant, le ressort de rappel ramène le mécanisme d'inter-verrouillage et les doigts d'engagement dans leur position stable.

Dans le cas de la commande des rapports 1 et 3, on active le solénoïde du système de stabilisation pour contrer l'action du ressort de rappel et ensuite on le relâche après que l'étape de réalignement du mécanisme d'inter-verrouillage avec le doigt d'engagement. On évite ainsi une action anticipée du ressort qui laisserait la fourchette hors de la zone d'attraction du système d'attraction.

La commande de l'actionneur pour assurer correctement le désengagement des rapports, puis assurer le bon positionnement du mécanisme d'inter-verrouillage avec le doigt d'engagement pour la sélection est similaire sur les fourchettes des rapports 1-3 et 2-4, à cette différence près.

Selon un deuxième aspect, l'invention concerne une transmission pour véhicule automobile à propulsion hybride comprenant un moteur thermique et au moins une machine électrique.

Ladite transmission comprend un arbre moteur relié directement ou indirectement au moteur thermique et/ou à la machine électrique, et un arbre d'entrainement relié aux roues motrices du véhicule automobile, et au moins un système de couplage comprenant des clabots solidaires d'une part d'un pignon fou porté à rotation libre sur un arbre d'entrainement et d'autre part des clabots solidaires d'une fourchette solidaire en rotation de l'arbre moteur, la fourchette étant configurée pour être déplacée longitudinalement selon l'axe de l'arbre d'entrainement par l'actionneur de boite afin d'engager ou désengager les clabots.

Le mécanisme de sélection comprend des doigts d'engagement capables de se déplacer selon l'axe de l'arbre d'entrainement par l'actionneur de boite pour engager ou désengager les rapports de réduction et un mécanisme d'inter-verrouillage capable de verrouiller la position desdits doigts d'engagement.

Le mécanisme de sélection comprend en outre un système mécanique de stabilisation des fourchettes,

Afin d'assurer une position stable des fourchettes compatible avec le fonctionnement du mécanisme de sélection, celui-ci comprend un système mécanique de stabilisation des fourchettes, dit de « billage ».

Le système de commande comprend un premier module apte à assurer le désengagement du rapport engagé en fonction de la position de l'actionneur. En d'autres termes, la position de l'actionneur est régulée à une position permettant le désengagement.

Le système de commande comprend un deuxième module apte à ramener la position de la fourchette dans la zone d'attraction du système de stabilisation des fourchettes, dit de « billage » en déterminant itérativement la position de l'actionneur en fonction de la fourchette. Dans cette zone d'attraction, la fourchette est ramenée dans sa position stable.

Le système de commande comprend un troisième module de régulation de la position de l'actionneur à sa position centrale pour réaligner le mécanisme d'inter-verrouillage avec le doigt d'engagement.

Le système de stabilisation des fourchettes comprend un solénoïde et un ressort de rappel connecté au mécanisme d'inter-verrouillage.

Lorsqu'un courant parcourt le solénoïde, celui-ci provoque le déplacement conjoint du mécanisme d'inter-verrouillage et des doigts d'engagement. A l'annulation du courant, le ressort de rappel ramène le mécanisme d'inter-verrouillage et les doigts d'engagement dans leur position stable.

La commande de l'actionneur pour assurer correctement le désengagement des rapports, puis assurer le bon positionnement du mécanisme d'inter-verrouillage avec le doigt d'engagement pour la sélection est similaire sur les fourchettes 1-3 et 2-4.Toutefois, dans le cas des rapports 1 et 3, le solénoïde est d'abord activé pour contrer l'action du ressort de rappel et ensuite relâché après que le réalignement du mécanisme d'inter-verrouillage avec le doigt d'engagement par le troisième module. On évite ainsi une action anticipée du ressort qui laisserait la fourchette hors de la zone d'attraction du système de stabilisation.

Par exemple, le système de couplage comprend une première fourchette capable d'engager de façon exclusive les rapports 1 ou 3 et une deuxième fourchette capable d'engager de façon exclusive les rapports 2 ou 4.

D'autres buts, caractéristiques et avantages de l'invention apparaîtront à la lecture de la description suivante, donnée uniquement à titre d'exemple non limitatif, et faite en référence aux dessins annexés sur lesquels :
- la figure 1 représente très schématiquement une architecture d'un mécanisme de sélection d'une transmission d'un véhicule automobile selon un mode de réalisation de l'invention ;
- les figures 2a et 2b illustre le fonctionnement d'un système de stabilisation des fourchettes ; et
- la figure 3 représente un organigramme d'un procédé de commande de l'actionneur du mécanisme de sélection de la figure 1.

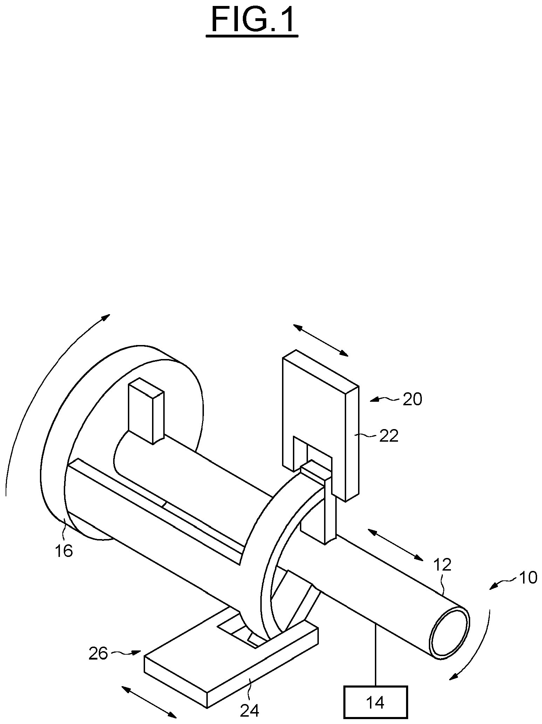

Tel qu'illustré très schématiquement sur la figure 1, un mécanisme de sélection, référencé 10 dans son ensemble, est destiné à être intégré dans une transmission 20 d'un véhicule automobile à propulsion hybride (non représenté) et comprenant, d'une part un moteur thermique (non représenté) et d'autre part une ou deux machines électriques (non représentées), destinés chacun à entrainer un arbre d'entrainement des roues motrices (non représentées).

Sur la figure 1, l'architecture de la transmission 20 a été simplifiée afin de ne voir apparaitre que les fourchettes 22, 24 du système de couplage 26 à clabots.

La première fourchette 22 permet d'engager de façon exclusive les rapports 1 ou 3 et la deuxième fourchette 24 permet d'engager de façon exclusive les rapports 2 ou 4.

Le mécanisme de sélection 10 comprend des doigts d'engagement 12 capables de se déplacer selon l'axe de l'arbre d'entrainement par un actionneur de boite 14 pour engager ou désengager les rapports de réduction.

Le mécanisme de sélection 10 comprend en outre un mécanisme d'inter-verrouillage 16 capable de verrouiller la position des doigts d'engagement 12.

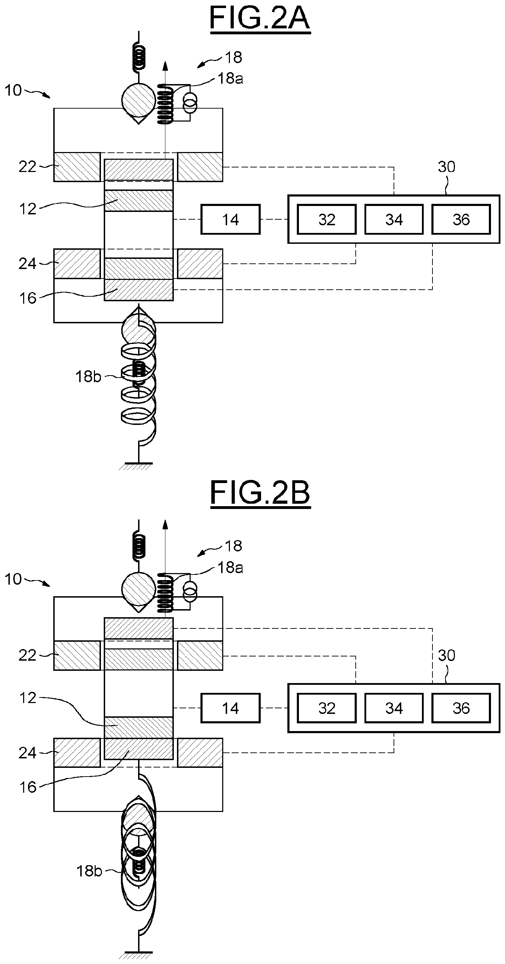

Afin d'assurer une position stable des fourchettes 22, 24 compatible avec le fonctionnement du mécanisme de sélection, celui-ci comprend un système mécanique 18 de stabilisation des fourchettes, dit de « billage », visible sur les figures 2a et 2b. Le système 18 de stabilisation des fourchettes comprend un solénoïde 18a et un ressort de rappel 18b connecté au mécanisme d'inter-verrouillage 16.

Lorsqu'un courant parcourt le solénoïde 18a, celui-ci provoque le déplacement conjoint du mécanisme d'inter-verrouillage 16 et des doigts d'engagement 12, tel que visible sur la figure 2b. A l'annulation du courant, le ressort de rappel 18b ramène le mécanisme d'inter-verrouillage 16 et les doigts d'engagement 12 dans leur position stable, visible sur la figure 2a.

La transmission comprend en outre un système 30 de commande de l'actionneur de boite 14. Ledit système 30 de commande reçoit en entrée la position de la première fourchette 22, issue par exemple d'un premier capteur de position (non représenté), la position de la deuxième fourchette 24, issue par exemple d'un deuxième capteur de position (non représenté), et la position du mécanisme d'inter-verrouillage 16, issue par exemple d'un troisième capteur de position (non représenté).

Le système 30 de commande de l'actionneur de boite 14 comprend un premier module 32 apte à assurer le désengagement du rapport engagé en fonction de la position de l'actionneur 14. En d'autres termes, la position de l'actionneur 14 est régulée à une position permettant le désengagement.

Le système 30 de commande de l'actionneur de boite 14 comprend un deuxième module 34 apte à ramener la position de la fourchette 22 ou 24 dans la zone d'attraction du système 18 de stabilisation des fourchettes, dit de « billage ». Dans cette zone d'attraction, la fourchette est ramenée dans sa position stable, visible sur la figure 2a. Le deuxième module 34 détermine itérativement la position de l'actionneur 14 en fonction de la fourchette 22 ou 24.

Le système 30 de commande de l'actionneur de boite 14 comprend un troisième module 36 de régulation de la position de l'actionneur 14 à sa position centrale pour réaligner le mécanisme d'inter-verrouillage 16 avec le doigt d'engagement 12.

La commande de l'actionneur 14 pour assurer correctement le désengagement des rapports, puis assurer le bon positionnement du mécanisme d'inter-verrouillage 16 avec le doigt d'engagement 12 pour la sélection est similaire sur les fourchettes 1-3 et 2-4.Toutefois, dans le cas des rapports 1 et 3, le solénoïde 18a est d'abord activé pour contrer l'action du ressort de rappel 18b et ensuite relâché après que le réalignement du mécanisme d'inter-verrouillage 16 avec le doigt d'engagement 12 par le troisième module 36. On évite ainsi une action anticipée du ressort qui laisserait la fourchette 22 hors de la zone d'attraction du système de stabilisation 18.

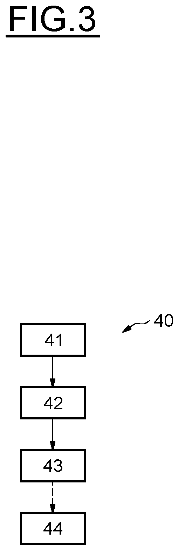

La figure 3 représente un organigramme d'un procédé 40 de commande des actionneurs de boite du mécanisme de sélection 10 de la transmission 20 de la figure 1.

Lors d'une première étape 41, on assure le désengagement du rapport engagé en fonction de la position de l'actionneur 14 issue d'un capteur de position (non représenté). En d'autres termes, la position de l'actionneur 14 est régulée à une position permettant le désengagement.

Lors d'une deuxième étape 42, on ramène la position de la fourchette 22 ou 24 dans la zone d'attraction du système 18 de stabilisation des fourchettes, dit de « billage ». Dans cette zone d'attraction, la fourchette est ramenée dans sa position stable, visible sur la figure 2a. Pour cela, on détermine itérativement la position de l'actionneur 14 en fonction de la fourchette 22 ou 24.

Lors d'une troisième étape 43, on régule la position de l'actionneur 14 à sa position centrale pour réaligner le mécanisme d'inter-verrouillage 16 avec le doigt d'engagement 12.

La commande de l'actionneur 14 pour assurer correctement le désengagement des rapports, puis assurer le bon positionnement du mécanisme d'inter-verrouillage 16 avec le doigt d'engagement 12 pour la sélection est similaire sur les fourchettes 1-3 et 2-4. Toutefois, dans le cas des rapports 1 et 3, on active le solénoïde 18a du système d'attraction 18 pour contrer l'action du ressort de rappel 18b et ensuite on le relâche après que le réalignement du mécanisme d'inter-verrouillage 16 avec le doigt d'engagement 12 lors de la troisième étape 43. On évite ainsi une action anticipée du ressort qui laisserait la fourchette 22 hors de la zone d'attraction du système d'attraction 18.

La présente invention est applicable à toute transmission dépourvue d'embrayage comprenant un système de couplage à clabots solidaire d'une fourchette et un actionneur de boite configuré pour déplacer axialement ladite fourchette et un mécanisme de sélection.

Grâce à l'invention, on s'assure du désengagement des rapports, puis du bon positionnement du mécanisme d'inter-verrouillage 16 avec le doigt d'engagement 12 avant d'actionner le mécanisme de sélection.

## Revendications

1. Procédé de commande d'au moins un actionneur de boite (14) d'un mécanisme de sélection (10) d'une transmission (20) pour véhicule automobile à propulsion hybride comprenant un moteur thermique et au moins une machine électrique, ladite transmission (20) comprenant un arbre moteur relié directement ou indirectement au moteur thermique et/ou à la machine électrique, et un arbre d'entrainement relié aux roues motrices du véhicule automobile, et au moins un système de couplage (26) comprenant des clabots solidaires d'une part d'un pignon fou porté à rotation libre sur un arbre d'entrainement et d'autre part des clabots solidaires d'une fourchette (22, 24) solidaire en rotation de l'arbre moteur, la fourchette (22, 24) étant configurée pour être déplacée longitudinalement selon l'axe de l'arbre d'entrainement par l'actionneur de boite (14) afin d'engager ou désengager les clabots, le mécanisme de sélection (10) comprenant des doigts d'engagement (12) capables de se déplacer selon l'axe de l'arbre d'entrainement par l'actionneur de boite (14) pour engager ou désengager les rapports de réduction et un mécanisme d'inter-verrouillage (16) capable de verrouiller la position desdits doigts d'engagement (12), le mécanisme de sélection (10) comprenant un système mécanique (18) de stabilisation des fourchettes, **caractérisé en ce que** :
- on assure le désengagement du rapport engagé en fonction de la position de l'actionneur (14) issue d'un capteur de position ;
- on ramène la position de la fourchette (22, 24) dans la zone d'attraction du système (18) de stabilisation des fourchettes en déterminant itérativement la position de l'actionneur (14) en fonction de la fourchette (22, 24) ; et
- on régule la position de l'actionneur (14) à sa position centrale pour réaligner le mécanisme d'inter-verrouillage (16) avec le doigt d'engagement (12).

2. Procédé selon la revendication 1, dans lequel le système de stabilisation (18) des fourchettes (22, 24) comprend un solénoïde (18a) et un ressort de rappel (18) connecté au mécanisme d'inter-verrouillage (16).

3. Procédé selon la revendication 2, dans lequel dans le cas de la commande des rapports 1 et 3, on active le solénoïde (18a) du système de stabilisation (18) pour contrer l'action du ressort de rappel (18b) et ensuite on le relâche après que l'étape de réalignement du mécanisme d'inter-verrouillage (16) avec le doigt d'engagement (12).

4. Transmission (20) pour véhicule automobile à propulsion hybride comprenant un moteur thermique et au moins une machine électrique, ladite transmission (20) comprenant un arbre moteur relié directement ou indirectement au moteur thermique et/ou à la machine électrique, et un arbre d'entrainement relié aux roues motrices du véhicule automobile, et au moins un système de couplage (26) comprenant des clabots solidaires d'une part d'un pignon fou porté à rotation libre sur un arbre d'entrainement et d'autre part des clabots solidaires d'une fourchette (22, 24) solidaire en rotation de l'arbre moteur, la fourchette (22, 24) étant configurée pour être déplacée longitudinalement selon l'axe de l'arbre d'entrainement par un actionneur de boite (14) afin d'engager ou désengager les clabots, ladite transmission comprenant un mécanisme de sélection (10) comprenant des doigts d'engagement (12) capables de se déplacer selon l'axe de l'arbre d'entrainement par l'actionneur de boite (14) pour engager ou désengager les rapports de réduction et un mécanisme d'inter-verrouillage (16) capable de verrouiller la position desdits doigts d'engagement (12),
**caractérisé en ce que**, le mécanisme de sélection (10) comprend un système mécanique (18) de stabilisation des fourchettes (22,24), comprenant un solénoïde (18a) et un ressort de rappel (18) connecté au mécanisme d'inter-verrouillage (16),
et **en ce que** la transmission comprend un système de commande (30) de l'actionneur de boite (14) du mécanisme de sélection comprenant :
- un premier module (32) apte à assurer le désengagement du rapport engagé en fonction de la position de l'actionneur (14) ;
- un deuxième module (34) apte à ramener la position de la fourchette (22, 24) dans la zone d'attraction du système (18) de stabilisation des fourchettes en déterminant itérativement la position de l'actionneur (14) en fonction de la fourchette (22, 24), ladite fourchette (22, 24) étant dans une position stable dans ladite zone d'attraction, et
- un troisième module (36) de régulation de la position de l'actionneur (14) à sa position centrale pour réaligner le mécanisme d'inter-verrouillage (16) avec le doigt d'engagement (12).

5. Transmission selon la revendication 4, dans laquelle le système de couplage (26) comprend une première fourchette (22) capable d'engager de façon exclusive les rapports 1 ou 3 et une deuxième fourchette (24) capable d'engager de façon exclusive les rapports 2 ou 4.

## Patentansprüche

1. Verfahren zum Steuern zumindest eines Getriebestellglieds (14) eines Auswahlmechanismus (10) eines Getriebes (20) für ein Kraftfahrzeug mit Hybridantrieb, das einen Verbrennungsmotor und zumindest eine elektrische Maschine umfasst, wobei das Getriebe (20) Folgendes umfasst: eine Motorwelle, die direkt oder indirekt mit dem Verbrennungsmotor und/oder mit der elektrischen Maschine verbunden ist, und eine Antriebswelle, die mit den Antriebsrädern des Kraftfahrzeugs verbunden ist, und zumindest ein Kopplungssystem (26), das Klauen umfasst, die fest verbunden sind mit einem auf einer Antriebswelle frei drehbar getragenen Freilaufritzel einerseits und mit Klauen andererseits, die mit einer drehfest mit der Motorwelle verbundenen Gabel (22, 24) fest verbunden sind, wobei die Gabel (22, 24) so konfiguriert ist, dass sie durch das Getriebestellglied (14) in Längsrichtung entlang der Antriebswellenachse verschiebbar ist, um die Klauen ein- oder auszurücken, wobei der Auswahlmechanismus (10) Eingriffsfinger (12) umfasst, die in der Lage sind, sich durch das Getriebestellglied (14) entlang der Antriebswellenachse zu bewegen, um die Untersetzungsgänge ein- oder auszurücken, und einen Verriegelungsmechanismus (16), der in der Lage ist, die Position der Eingriffsfinger (12) zu verriegeln, wobei der Auswahlmechanismus (10) ein mechanisches System (18) zur Stabilisierung der Gabeln umfasst, **dadurch gekennzeichnet, dass**:
- das Ausrücken des eingelegten Gangs in Abhängigkeit von der Position des Stellglieds (14), die von einem Positionssensor stammt, sichergestellt wird;
- die Position der Gabel (22, 24) wieder in den Anziehungsbereich des Systems (18) zur Stabilisierung der Gabeln gebracht wird, indem die Position des Stellglieds (14) in Abhängigkeit von der Gabel (22, 24) iterativ bestimmt wird; und
- die Position des Stellglieds (14) auf seine Mittelposition ausgerichtet wird, um den Verriegelungsmechanismus (16) wieder mit dem Eingriffsfinger (12) auszurichten.

2. Verfahren nach Anspruch 1, wobei das System zur Stabilisierung (18) der Gabeln (22, 24) einen Elektromagneten (18a) und eine mit dem Verriegelungsmechanismus (16) verbundene Rückstellfeder (18) umfasst.

3. Verfahren nach Anspruch 2, wobei im Fall der Steuerung der Gänge 1 und 3 der Elektromagnet (18a) des Systems zur Stabilisierung (18) aktiviert wird, um der Wirkung der Rückstellfeder (18b) entgegenzuwirken, und dann nach dem Schritt der Neuausrichtung des Verriegelungsmechanismus (16) mit dem Eingriffsfinger (12) freigegeben wird.

4. Getriebe (20) für ein Kraftfahrzeug mit Hybridantrieb, das einen Verbrennungsmotor und zumindest eine elektrische Maschine umfasst, wobei das Getriebe (20) Folgendes umfasst: eine Motorwelle, die direkt oder indirekt mit dem Verbrennungsmotor und/oder mit der elektrischen Maschine verbunden ist, und eine Antriebswelle, die mit den Antriebsrädern des Kraftfahrzeugs verbunden ist, und zumindest ein Kopplungssystem (26), das Klauen umfasst, die fest verbunden sind mit einem auf einer Antriebswelle frei drehbaren Freilaufritzel einerseits und mit Klauen andererseits, die mit einer drehfest mit der Motorwelle verbundenen Gabel (22, 24) fest verbunden sind, wobei die Gabel (22, 24) so konfiguriert ist, dass sie durch ein Getriebestellglied (14) in Längsrichtung entlang der Antriebswellenachse verschiebbar ist, um die Klauen ein- oder auszurücken, wobei das Getriebe einen Auswahlmechanismus (10) umfasst, der Eingriffsfinger (12) umfasst, die in der Lage sind, sich durch das Getriebestellglied (14) entlang der Antriebswellenachse zu bewegen, um die Untersetzungsgänge ein- oder auszurücken, und einen Verriegelungsmechanismus (16), der in der Lage ist, die Position der Eingriffsfinger (12) zu verriegeln,
**dadurch gekennzeichnet, dass** der Auswahlmechanismus (10) ein mechanisches System (18) zur Stabilisierung der Gabeln (22, 24) umfasst, das einen Elektromagneten (18a) und eine mit dem Verriegelungsmechanismus (16) verbundene Rückstellfeder (18) umfasst,
und dadurch, dass das Getriebe ein System (30) zum Steuern des Getriebestellglieds (14) des Auswahlmechanismus umfasst, das Folgendes umfasst:
- ein erstes Modul (32), das in der Lage ist, das Ausrücken des eingelegten Gangs in Abhängigkeit von der Position des Stellglieds (14) zu gewährleisten;
- ein zweites Modul (34), das in der Lage ist, die Position der Gabel (22, 24) wieder in den Anziehungsbereich des Systems (18) zur Stabilisierung der Gabeln zu bringen, indem die Position des Stellglieds (14) in Abhängigkeit von der Gabel (22, 24) iterativ bestimmt wird, wobei sich die Gabel (22, 24) im Anziehungsbereich in einer stabilen Position befindet, und
- ein drittes Modul (36) zur Ausrichtung der Position des Stellglieds (14) auf seine Mittelposition, um den Verriegelungsmechanismus (16) wieder mit dem Eingriffsfinger (12) auszurichten.

5. Getriebe nach Anspruch 4, wobei das Kopplungssystem (26) eine erste Gabel (22), die dazu in der Lage ist, ausschließlich die Gänge 1 oder 3 einzulegen, und eine zweite Gabel (24), die dazu in der Lage ist, ausschließlich die Gänge 2 oder 4 einzulegen, umfasst.

## Claims

1. Method for controlling at least one gearbox actuator (14) of a selection mechanism (10) of a transmission (20) for a hybrid-propulsion motor vehicle comprising a combustion engine and at least one electric machine, said transmission (20) comprising a drive shaft connected directly or indirectly to the combustion engine and/or to the electric machine, and a driving shaft connected to the drive wheels of the motor vehicle, and at least one coupling system (26) comprising dogs secured, on the one hand, to an idle gear rotating freely on a driving shaft and, on the other hand, dogs secured to a fork (22, 24) coupled in rotation with the drive shaft, the fork (22, 24) being configured to be moved longitudinally along the axis of the driving shaft by the gearbox actuator (14) in order to engage or disengage the dogs, the selection mechanism (10) comprising engagement fingers (12) capable of moving along the axis of the driving shaft by the gearbox actuator (14) to engage or disengage the reduction ratios and an interlocking mechanism (16) capable of locking the position of said engagement fingers (12), the selection mechanism (10) comprising a mechanical system (18) for stabilizing the forks, **characterized in that**:
- the engaged ratio is disengaged in dependence on the position of the actuator (14) obtained from a position sensor,
- the position of the fork (22, 24) is returned to the attraction zone of the system (18) for stabilizing the forks by iteratively determining the position of the actuator (14) in dependence on the fork (22, 24); and
- the position of the actuator (14) is adjusted to its central position to realign the interlocking mechanism (16) with the engagement finger (12).

2. Method according to Claim 1, in which the system (18) for stabilizing the forks (22, 24) comprises a solenoid (18a) and a return spring (18) connected to the interlocking mechanism (16).

3. Method according to Claim 2, in which, in the case of the control of the ratios 1 and 3, the solenoid (18a) of the stabilizing system (18) is activated to counter the action of the return spring (18b) and it is then released after the step of realigning the interlocking mechanism (16) with the engagement finger (12).

4. Transmission (20) for a hybrid-propulsion motor vehicle comprising a combustion engine and at least one electric machine, said transmission (20) comprising a drive shaft connected directly or indirectly to the combustion engine and/or to the electric machine, and a driving shaft connected to the drive wheels of the motor vehicle, and at least one coupling system (26) comprising dogs secured, on the one hand, to an idle gear freely rotating on a driving shaft and, on the other hand, dogs secured to a fork (22, 24) coupled in rotation with the drive shaft, the fork (22, 24) being configured to be moved longitudinally along the axis of the driving shaft by a gearbox actuator (14) in order to engage or disengage the dogs, said transmission comprising a selection mechanism (10) comprising engagement fingers (12) capable of moving along the axis of the driving shaft by the gearbox actuator (14) in order to engage or disengage the reduction ratios and an interlocking mechanism (16) capable of locking the position of said engagement fingers (12),
**characterized in that** the selection mechanism (10) comprises a mechanical system (18) for stabilizing the forks (22, 24), comprising a solenoid (18a) and a return spring (18) connected to the interlocking mechanism (16),
and **in that** the transmission comprises a system (30) for controlling the gearbox actuator (14) of the selection mechanism comprising:
- a first module (32) able to disengage the engaged ratio in dependence on the position of the actuator (14) ;
- a second module (34) able to return the position of the fork (22, 24) to the attraction zone of the system (18) for stabilizing the forks by iteratively determining the position of the actuator (14) in dependence on the fork (22, 24), said fork (22, 24) being in a stable position in said attraction zone, and
- a third module (36) for adjusting the position of the actuator (14) to its central position to realign the interlocking mechanism (16) with the engagement finger (12).

5. Transmission according to Claim 4, in which the coupling system (26) comprises a first fork (22) capable of exclusively engaging the ratios 1 or 3 and a second fork (24) capable of exclusively engaging the ratios 2 or 4.
